# EUROPEAN PATENT SPECIFICATION

(11) **EP 2 105 054 B1**
(45) Date of publication and mention of the grant of the patent: **07.08.2013**
(21) Application number: 09154188.8
(22) Date of filing: 03.03.2009
(51) Int. Cl.: A23G 9/22, A23G 9/28

(54) **Dosage group of cooled creamy food substances having a fluid behaviour**
Dosierungsgruppe für gekühlte cremige Nahrungsmittelsubstanzen mit flüssigem Verhalten
Groupe de dosage de substances alimentaires crémeuses refroidies ayant un comportement liquide

(30) Priority: 27.03.2008 IT MI20080511
(43) Date of publication of application: 30.09.2009
(73) Proprietor: G.S.G. S.r.l., 36100 Vicenza (IT)
(72) Inventor: Bravo, Stefano, 36050 Sovizzo (IT)
(74) Representative: Martegani, Franco

(56) References cited:
- WO-A1-2004/054380
- NL-A- 9 101 283
- US-A- 2 054 835
- US-A- 3 677 443
- US-A- 5 919 510
- US-B1- 6 514 555

## Description

The present invention relates to a dosage group of cooled creamy food substances having a fluid behaviour and a distributor group equipped with said dosage group.

Distributor groups of cooled creamy food substances having a fluid behaviour, such as whipped cream or soft ice-cream, are currently extremely widespread.

These distributor groups generally comprise a cooled container, a distributor group, such as a cream whipper or a distributing pump normally partially positioned inside the cooled container and associated with relative cooling means, and a dosage group, normally beak-shaped and situated outside the cooled container from which the cooled substance contained in the container is discharged.

It is evident from the above description, and in view of the substances treated by these machines, such as whipped cream or soft ice-cream or cooled creamy food substances having a fluid behaviour in general, how important it is to maintain the substance to be distributed at a certain temperature, lower than 8°C in relation to the substance itself.

Subjecting these cooled creamy food substances to a relatively high temperature, such as room temperature, does in fact cause very rapid damage to the substances themselves in addition to a rise in the bacterial charge.

In the light of this problem, it is consequently important to guarantee that the substance to be distributed does not undergo heating, or in any case is not subjected to "high" temperatures such as room temperature, not only when it is contained inside the specific container, advantageously cooled, but also during the distribution phase in which the substance flows out of the machine passing through the dosage beak situated outside the cooled container and at least partly in contact with the air.

In order to overcome this problem, i.e. guaranteeing a low temperature also of the dosage beak, the machines currently known generally comprise an insulating coating positioned around the dosage beak itself in order to limit, as much as possible, the thermal exchange of this element with the outside environment, generally at a higher temperature than that present inside the cooled container.

Unfortunately, however, this second known solution of the terminal part of the dosage beak, which is generally equipped with a dosage nozzle from which the substance to be distributed exits, is also at least partially exposed to the air of the surrounding environment and is not completely covered by the layer of insulting coating.

In this way, therefore, the dosage nozzle must be subjected to a temperature, room temperature, which is much higher than the ideal value for the substance to be distributed, lower than 8°C.

In particular, these known dosage nozzles also undergo heating which is generated both by convection of the hot air in contact with the surface of the dosage nozzle itself, and also by irradiation due to the walls which surround the visible area.

According to US 5919510 a dosage group for cooled creamy food substances is disclosed comprising a hollow central cylindrical portion having a first end, connectable to said mouth, and a second end having a dosage nozzle of said substance said dosage group also comprises heat transfer means which extend from the dosage nozzle to said first end of the central cylindrical portion.

A general objective of the present invention is to solve the drawbacks of the known art described above in an extremely simple, economical and particularly functional manner.

A further objective is to provide a dosage group of cooled creamy food substances having a fluid behaviour, and a relative distributor group equipped with said dosage group, in which the temperature of the dosage nozzle is maintained at ideal values, generally lower than 8°C, in relation to the cooled creamy food substance to be distributed.

Another objective is to provide a dosage group of cooled creamy food substances having a fluid behaviour in which the temperature of the dosage nozzle is maintained at ideal values in relation to the cooled creamy food substance to be distributed and wherein the dosage group can be easily installed on a relative distributor group without requiring modifications to the existing distributor group.

Yet another objective is to provide a dosage group of cooled creamy food substances having a fluid behaviour in which the temperature of the dosage nozzle is maintained at ideal values in relation to the cooled creamy food substance to be distributed and wherein the dosage group has encumbrances entirely comparable to the known dosage groups.

A further objective is to provide a dosage group of cooled creamy food substances having a fluid behaviour in which the temperature of the dosage nozzle is maintained at ideal values in relation to the cooled creamy food substance to be distributed and wherein the dosage group can also be easily dismantled and washed.

In view of the above objectives, according to the present invention, a dosage group of cooled creamy food substances having a fluid behaviour and a distributor group equipped with said dosage group have been conceived, having the characteristics indicated in the enclosed claims.

The structural and functional characteristics of the present invention and its advantages with respect to the known art will appear even more evident from the following description, referring to the enclosed drawings, which show a dosage group of cooled creamy food substances having a fluid behaviour, and a distributor group equipped with said dosage group produced according to the innovative principles of the same invention. In the drawings:
- figure 1 shows a partially cross-sectional perspective view of a dosage group of cooled creamy food substances according to the present invention;
- figure 2 shows a sectional view of the dosage group of figure 1;
- figure 3 shows a perspective view of a distributor group equipped with a dosage group of cooled creamy food substances according to the present invention; and
- figure 4 shows an enlarged partial cross-sectional view of the distributor group of figure 3;
- figure 5 shows the dismantling/assembly phases of the dosage group on the relative distributor group; and
- figure 6 shows a section of another dosage group of cooled creamy food substances according to the present invention.

With reference to the drawings, a dosage group of cooled creamy food substances having a fluid behaviour according to the present invention is indicated as a whole with 10, whereas a distributor group equipped with said dosage group 10 is schematically indicated with 100.

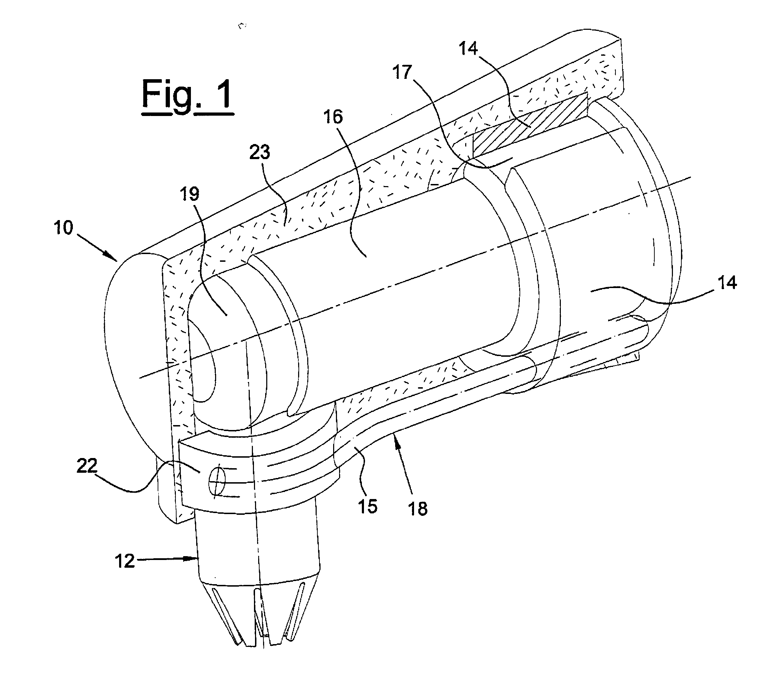

The above dosage group 10 of the present invention of cooled creamy food substances having a fluid behaviour, of which an embodiment is schematically shown in figure 1, can be applied to the outside of a container 21, preferably cooled, of the above-mentioned substance in correspondence with a mouth facing the outside of a connection device 11, said device 11 is at least partially positioned inside the cooled container 21 and is generally associated with a cooling device 20, such as an evaporator.

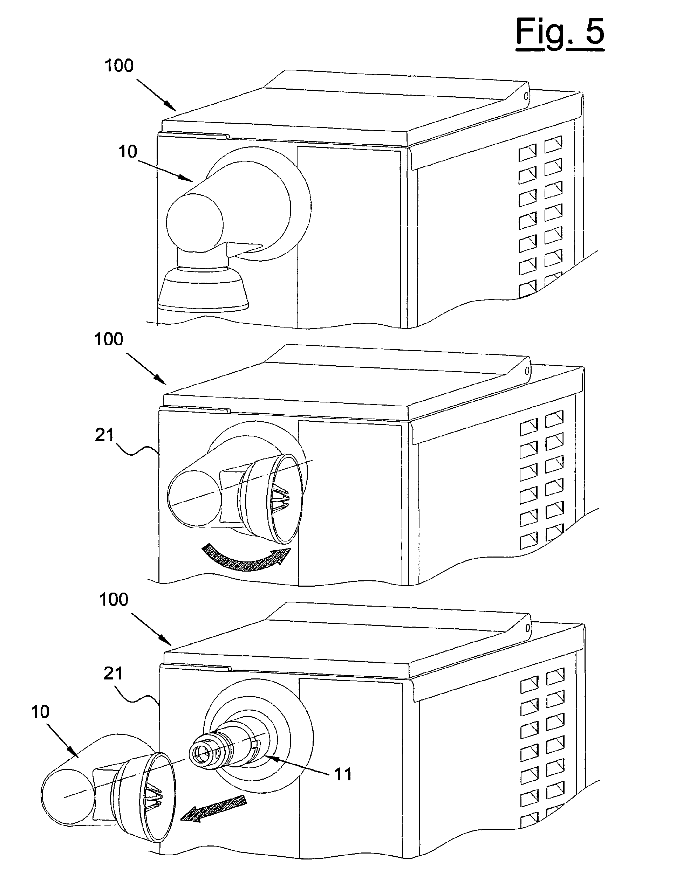

The dismantling/assembly phases of the dosage group 10 on the relative connection device 11 at least partially positioned inside the cooled container 21 are schematically shown in figure 5.

Said connection device 11 can comprise a cream-whipping device, and consequently the container 21 can be a cooled container for whipped cream, or, alternatively but not exclusively, the connection device 11 can comprise a pumping device for "soft ice-cream", and in this case the container 21 can be a cooled container for this type of ice-cream.

In particular, according to the invention, the dosage group 10 comprises a hollow central cylindrical portion 16, possibly with a varying section, which is equipped with a first end 17, open and connectable to the mouth of the connection device 11 mentioned above on the front wall of the container 21, and a second end 19 equipped with a dosage nozzle 12 for the substance leaving the container 21.

Furthermore, according to the invention, the dosage group 10 comprises heat transfer means 18 which extend from the dosage nozzle 12 to the first end 17 of the central cylindrical portion 16.

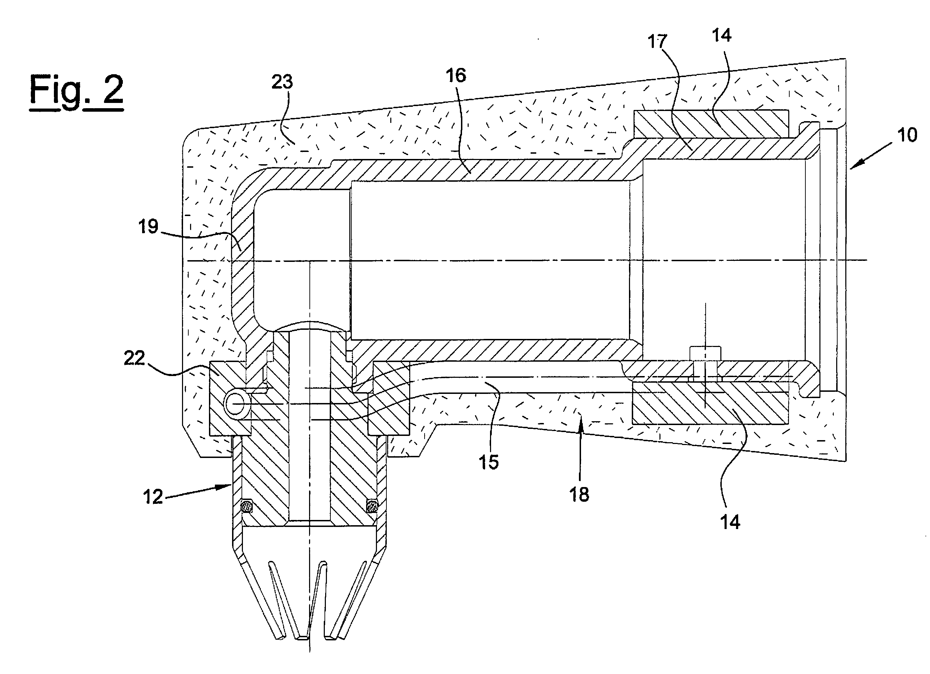

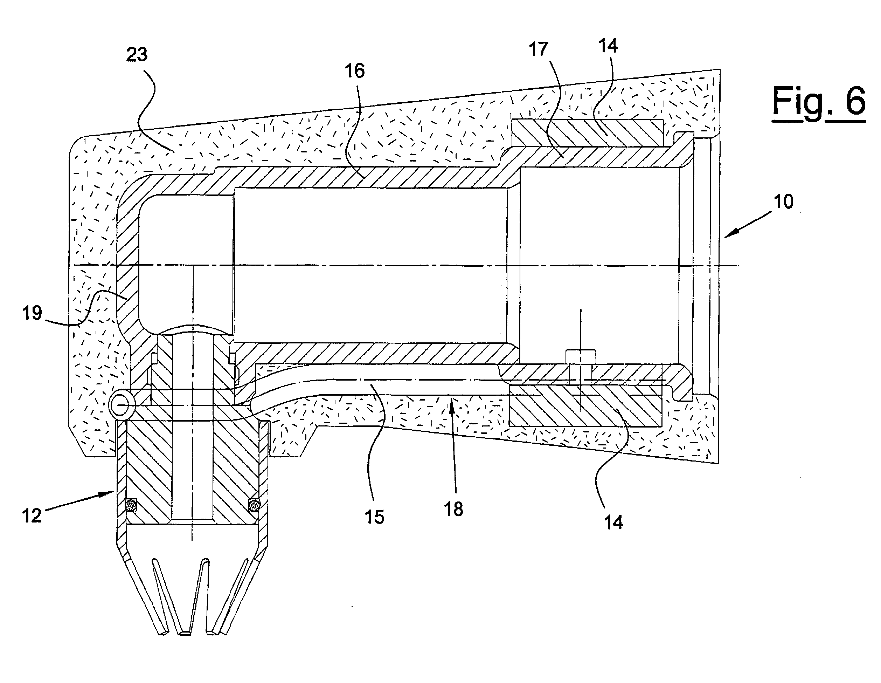

As can be seen in figures 1-4 and 6, the above heat transfer means 18 comprise a first structure 14 made of a material having a high thermal conductivity situated in correspondence with the first end 17 of the central cylindrical portion 16, and at least a tubular element 15 which extends to the central cylindrical portion 16 starting from the first conductive structure 14 as far as the dosage nozzle 12, as shown in figure 6, preferably in correspondence with a second conductive structure 22, as shown in figures 1, 2 and 4.

According to what is described above, the dosage group 10 therefore preferably also comprises a second structure having a high thermal conductivity 22 situated in correspondence with the second end 19.

According to this embodiment, the at least one tubular element 15 develops from the first conductive structure 14 to the central cylindrical portion 16 as far as the second conductive structure 22.

As shown, both the first and second conductive structure 14, 22 are preferably ring structures 14, 22, generally made of copper, aluminum, nickel, chromium or in any case a material having a high thermal conductivity, which develop externally with respect to the central cylindrical portion 16, around the first and second end 17 and 19 respectively, in which said second end 19 is normally connected at about 90° with respect to the central cylindrical portion 16.

Again according to the same embodiment visible in the figures, said first conductive structure 14 is preferably a ring structure 14 which develops externally around the first end 17 of the central cylindrical portion 16 whereas the at least one tubular element 15 at least partially enfolds the dosage nozzle 12 situated in correspondence with the second end 19.

As mentioned above, in the examples illustrated, this second end 19 is connected at about 90° with respect to the rest of the central cylindrical portion 16 forming a "beak" structure.

Finally, according to the invention, the presence is envisaged of a coating 23, of the insulating type, which covers the central cylindrical portion 16, the heat transfer means 18 and, partially, said dosage nozzle 12.

According to a preferred embodiment, the at least one tubular element 15 can be metallic, with a substantially circular section, closed at the ends, and containing at least one liquid substance.

In particular, the at least one metallic tubular element 15 can be made of copper or aluminum, nickel, chromium or any material having a high thermal conductivity, as also the first and second conductive ring structure 14, 22 can be made of copper or any other metallic material having a high thermal conductivity.

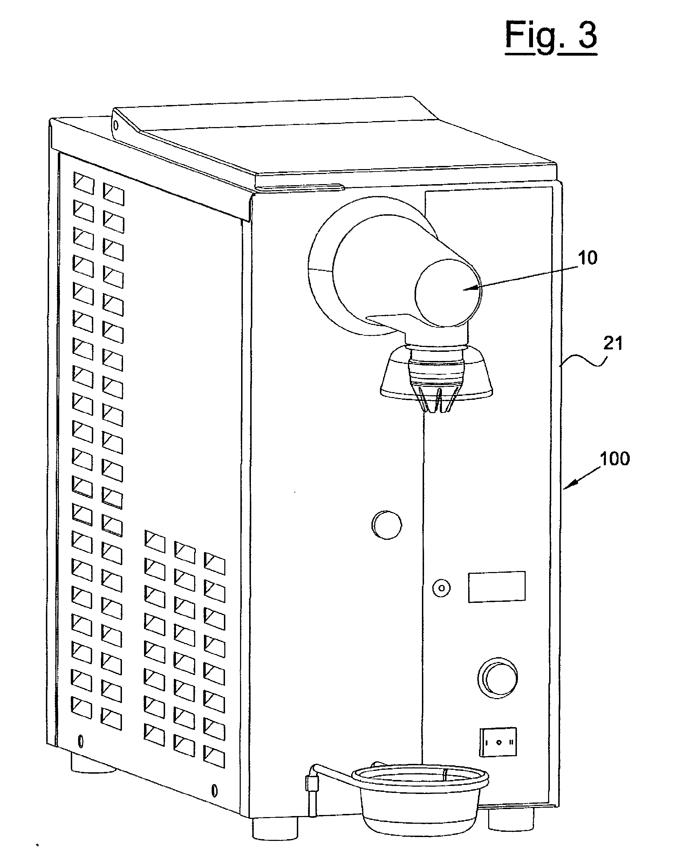

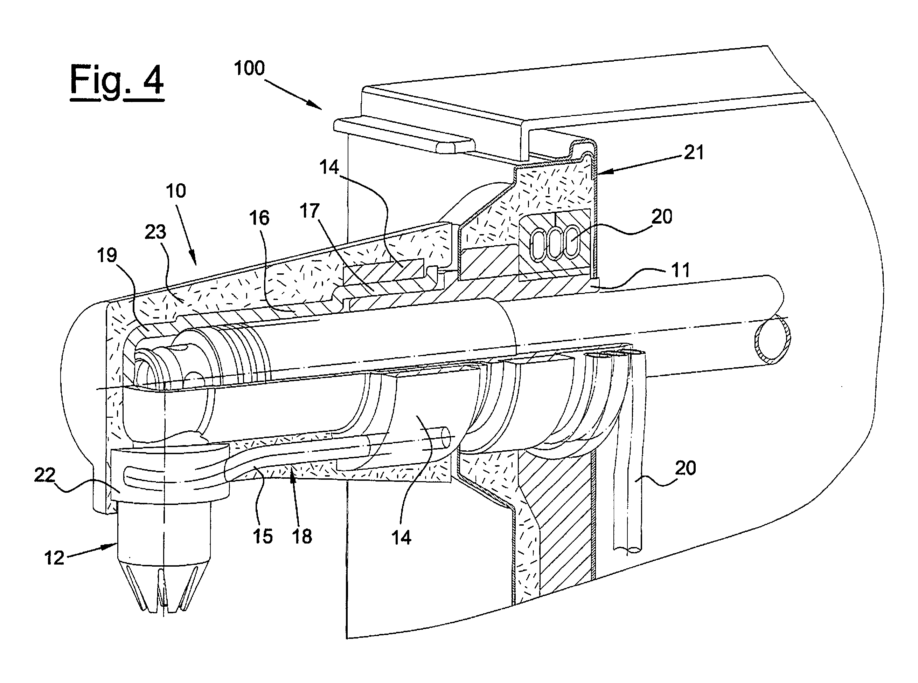

With reference to figures 3 and 4, these show a distributor group 100 of cooled creamy food substances equipped with a dosage group 10 according to the present invention.

As can be seen in figures 4 and 5, the dosage group 10 is associated with a connection device 11 equipped with an end at least facing the outside in correspondence with a front wall of the cooled container 21, said connection device 11 is generally associated with cooling means 20, such as an evaporation coil inside the cooled container 21 as shown in figure 4. Said distributor group 100 therefore comprises a dosage group 10 as described above and is applied to the connection device 11 outside the cooled container 21.

As can be seen in figure 5, in fact, the dosage group 10 remains completely outside the cooled container 21 greatly facilitating dismantling and cleaning operations, shown in figure 5 mentioned above, of both the dosage group 10 and the distributor group 100.

As can be seen in figure 4, said dosage group 10 comprises, as described above, a hollow central cylindrical portion 16 having a first end 17, associated with the connection device 11, and a second end 19 equipped with a dosage nozzle 12, in which there is also the presence of heat transfer means 18 which extend from the dosage nozzle 12 to the first end 17 of the central cylindrical portion 16. In this way, as, during the use of the group 10, the first end 17 is close to the front wall of the cooled container 21 and possibly the cooling means 20 of the connection device 11 such as the coil 20 of figure 4, the first conductive ring structure 14, positioned around said first end 17 and the relative connected at least one tubular element 15 rapidly and efficiently cool the dosage nozzle 12 maintaining it at an ideal temperature for the substance to be distributed, generally lower than 8°C.

From what is described above with reference to the figures, it is evident that a dosage group of cooled creamy food substances having a fluid behaviour and a distributor group equipped with said dosage group according to the present invention is particularly useful and advantageous. The objectives indicated in the preamble of the description are therefore achieved.

The dosage group of cooled creamy food substances having a fluid behaviour as described above does in fact maintain the temperature of the dosage nozzle at ideal values in relation to the cooled creamy food substance to be distributed thanks to the presence of the heat transfer means which extend from the above dosage nozzle to the opposite end of the dosage group.

In particular, according to the preferred embodiment shown in the figures, the heat transfer means comprise a conductive ring structure situated in correspondence with a first end of the dosage group, and at least one tubular element which develops from said conductive structure as far as the second conductive structure connected to the dosage nozzle.

The above tubes, generally made of metal, copper or aluminum, nickel, chromium or any material having a high thermal conductivity and with a generally circular section, comprise in their interior, a certain quantity of liquid, water, alcohol or various mixtures depending on the temperature of use, and effect a rapid thermal exchange between the two ends of the dosage group to which they are connected.

Even if, in fact, a generic metallic tube conducts heat from one side to the other of its length depending on the material of which it is made, the presence of a liquid which changes the state at the ends, allows sensitive and above all latent heat to be absorbed, considerably increasing, by about 14 times, the thermal flow between the first portion of the group, generally cold as it is close to the cooled container, and the dosage nozzle, which is "warm" as it is in direct contact with the outside air at room temperature.

These heat transfer means described above generally form a structure with "heat tubes" in which the heat is advantageously removed rapidly and efficiently from the dosage nozzle, otherwise at room temperature, thus bringing it to an ideal temperature for the substance to be distributed.

In order to guarantee this high and rapid heat flow, the inner surface of said tubular elements, defined as "heat tubes" above, have an adequate porosity for the surface tension of the liquid contained therein, in order to allow the liquid itself to flow backwards along the tube in spite of the opposite thrust of the vapour generated during use.

For this purpose it is important for these tubes to be closed in a protected environment to prevent contamination of the liquid.

Said dosage group of cooled creamy food substances having a fluid behaviour according to the present invention advantageously has encumbrances completely comparable to those of the known dosage groups, it can be easily installed on the relative distributor group without requiring modifications to the existing distributor group, and can also be easily dismantled and washed.

The forms, as also the materials, of the dosage group of cooled creamy food substances having a fluid behaviour and distributor group equipped with said dosage group of the present invention can naturally differ from that shown for purely illustrative and non-limiting purposes in the drawings.

The protection scope of the invention is therefore delimited by the enclosed claims.

## Claims

1. A dosage group (10) of cooled creamy food substances having a fluid behaviour applicable to the outside of a cooled container (21) of said substance in correspondence with a mouth towards the outside of a connection device (11) positioned inside said cooled container (21) and associated with cooling means (20), said dosage group (10) comprising a hollow central cylindrical portion (16) having a first end (17), connectable to said mouth of said connection device (11), and a second end (19) having a dosage nozzle (12) of said substance, said dosage group (10) also comprising heat transfer means (18) which extend from said dosage nozzle (12) to said first end (17) of said central cylindrical portion (16); the group being **characterized in that** said heat transfer means (18) comprise a first structure having a high thermal conductivity (14) positioned in correspondence with said first end (17) of said central cylindrical portion (16), and at least one tubular element (15) which extends from said first conductive structure (14) to said central cylindrical portion (16) as far as said dosage nozzle (12), said central cylindrical portion (16) having an varying section; a second structure having a high thermal conductivity (22) being situated in correspondence with said second end (19), said at least one tubular element (15) extending from said first conductive structure (14) to said central cylindrical portion (16) as far as said second conductive structure (22); said at least one tubular element (15) comprising at least one metallic tubular element (15) made of a material having a high thermal conductivity and having a substantially circular section closed at the ends inside which there is at least a liquid substance.

2. The dosage group (10) according to claim 1, **characterized in that** said first and second conductive structure (14, 22) are ring structures (14, 22) which extend externally around said first and second end (17, 19) respectively of said central cylindrical portion (16), said second end (19) being connected at about 90° with respect to said central cylindrical portion (16).

3. The dosage group (10) according to any of the previous claims, **characterized in that** it comprises an insulating coating (23) covering said central cylindrical portion (16), said heat transfer means (18), and partially said dosage nozzle (12).

4. The dosage group (10) according to claim 1, **characterized in that** said connection device (11) comprises a cream whipper.

## Patentansprüche

1. Dosiergruppe (10) für gekühlte cremige Nahrungsmittelsubstanzen mit einem Fließverhalten, die an die Außenseite eines gekühlten Behälters (21) der Substanz entsprechend einer Mündung zu der Außenseite einer Verbindungsvorrichtung (11) anwendbar ist, die in dem gekühlten Behälter (21) positioniert und einem Kühlmittel (20) zugeordnet ist, wobei die Dosiergruppe (10) einen hohlen zentralen zylindrischen Abschnitt (16) mit einem ersten Ende (17), das mit der Mündung der Verbindungsvorrichtung (11) verbindbar ist, und einem zweiten Ende (19) umfasst, das eine Dosierdüse (12) für die Substanz aufweist, wobei die Dosiergruppe (10) auch ein Wärmeübertragungsmittel (18) umfasst, das sich von der Dosierdüse (12) zu dem ersten Ende (17) des zentralen zylindrischen Abschnitts (16) erstreckt; wobei die Gruppe **dadurch gekennzeichnet ist, dass** das Wärmeübertragungsmittel (18) einen ersten Aufbau mit einer hohen thermischen Leitfähigkeit (14), der entsprechend dem ersten Ende (17) des zentralen zylindrischen Abschnitts (16) positioniert ist, und zumindest ein Rohrelement (15) umfasst, das sich von dem ersten leitenden Aufbau (14) zu dem zentralen zylindrischen Abschnitt (16) so weit wie die Dosierdüse (12) erstreckt, wobei der zentrale zylindrische Abschnitt (16) einen variierenden Querschnitt besitzt; wobei ein zweiter Aufbau mit einer hohen thermischen Leitfähigkeit (22) entsprechend dem zweiten Ende (19) angeordnet ist, wobei sich das zumindest eine Rohrelement (15) von dem ersten leitenden Aufbau (14) zu dem zentralen zylindrischen Abschnitt (16) so weit wie der zweite leitende Aufbau (22) erstreckt; wobei das zumindest eine Rohrelement (15) zumindest ein Metallrohrelement (15) umfasst, das aus einem Material hergestellt ist, das eine hohe thermische Leitfähigkeit besitzt und einen im Wesentlichen kreisförmigen Querschnitt besitzt, der an den Enden geschlossen ist, innerhalb denen sich zumindest eine flüssige Substanz befindet.

2. Dosiergruppe (10) nach Anspruch 1, **dadurch gekennzeichnet, dass** der erste und zweite leitende Aufbau (14, 22) Ringaufbauten (14, 22) sind, die sich extern um das erste bzw. zweite Ende (17, 19) des zentralen zylindrischen Abschnitts (16) erstrecken, wobei das zweite Ende (19) unter etwa 90° in Bezug auf den zentralen zylindrischen Abschnitt (16) verbunden ist.

3. Dosiergruppe (10) nach einem der vorhergehenden Ansprüche, **dadurch gekennzeichnet, dass** sie eine Isolierbeschichtung (23) umfasst, die den zentralen zylindrischen Abschnitt (16), das Wärmeübertragungsmittel (18) und teilweise die Dosierdüse (12) bedeckt.

4. Dosiergruppe (10) nach Anspruch 1, **dadurch gekennzeichnet, dass** die Verbindungsvorrichtung (11) eine Rühreinrichtung für Creme umfasst.

## Revendications

1. Groupe de dosage (10) de substances alimentaires crémeuses refroidies ayant un comportement fluide applicable à l'extérieur d'un récipient refroidi (21) de ladite substance en correspondance avec une embouchure vers l'extérieur d'un dispositif de connexion (11) positionné à l'intérieur dudit récipient refroidi (21) et associé à un moyen de refroidissement (20), ledit groupe de dosage (10) comprenant une partie centrale cylindrique et creuse (16) ayant une première extrémité (17), pouvant être connectée à ladite embouchure du dispositif de connexion (11), et une deuxième extrémité (19) comportant une buse de dosage (12) de ladite substance, ledit groupe de dosage (10) comprenant aussi un moyen de transfert de chaleur (18) qui s'étend de ladite buse de dosage (12) à ladite première extrémité (17) de la partie centrale cylindrique (16) ; le groupe étant **caractérisé en ce que** ledit moyen de transfert de chaleur (18) comprend une première structure ayant une conductivité thermique élevée (14) positionnée en correspondance avec ladite première extrémité (17) de la partie centrale cylindrique (16), et au moins un élément tubulaire (15) qui s'étend de ladite première structure conductrice (14) à ladite partie centrale cylindrique (16) jusqu'à ladite buse de dosage (12), ladite partie centrale cylindrique (16) étant de section variable ; une deuxième structure ayant une conductivité thermique élevée (22) étant située en correspondance avec ladite deuxième extrémité (19), ledit au moins un élément tubulaire (15) s'étendant de ladite première structure conductrice (14) à ladite partie centrale cylindrique (16) jusqu'à ladite deuxième structure conductrice (22) ; ledit au moins un élément tubulaire (15) comprenant au moins un élément tubulaire métallique (15) fait d'un matériau ayant une conductivité thermique élevée et de section substantiellement circulaire, fermé aux extrémités, à l'intérieur duquel se trouve au moins une substance liquide.

2. Groupe de dosage (10) selon la revendication 1, **caractérisé en ce que** lesdites première et deuxième structures conductrices (14, 22) sont des structures annulaires (14, 22) qui s'étendent extérieurement respectivement autour desdites première et deuxième extrémités (17, 19) de la partie centrale cylindrique (16), ladite deuxième extrémité (19) étant connectée à environ 90° par rapport à ladite partie centrale cylindrique (16).

3. Groupe de dosage (10) selon l'une quelconque des revendications précédentes, **caractérisé en ce qu'**il comprend un revêtement isolant (23) recouvrant ladite partie centrale cylindrique (16), ledit moyen de transfert de chaleur (18) et partiellement ladite buse de dosage (12).

4. Groupe de dosage (10) selon la revendication 1, **caractérisé en ce que** ledit dispositif de connexion (11) comprend un fouet à crème.
